# EUROPEAN PATENT APPLICATION

(11) **EP 2 667 044 A1**
(43) Date of publication of application: **27.11.2013**
(21) Application number: 12737173.0
(22) Date of filing: 11.01.2012
(51) Int. Cl.: F16C 3/10, C23C 8/26, F01L 1/04, F01L 13/00, F02B 77/00, F16C 3/20, F16C 9/02

(54) **SHAFT FOR ENGINE**

(30) Priority: 21.01.2011 JP 2011010451
(71) Applicant: NTN Corporation, Osaka-shi, Osaka 550-0003 (JP)
(72) Inventor: KATAYAMA Akihiko, Iwata-shi Shizuoka 438-0037 (JP)
(74) Representative: Grünecker, Kinkeldey, Stockmair & Schwanhäusser
(86) International application number: PCT/JP2012/050298
(87) International publication number: WO 2012/098956

(57) **Abstract**

A shaft for an engine is an assembly type, which allows use of one-piece type rolling bearings, eliminates concerns on potential alignment problems in the inner ring or the outer ring, and provides low friction and high durability. The assembly type engine shaft includes journal shafts 5 having their outer diameter surfaces mounted with one-piece type rolling bearings 4, 8, which respectively include one-piece type inner rings 4a, 8a; one-piece type outer rings 4c, 8c; and rollers 4b, 8b encased in retainers 4d, 8d disposed between the inner and outer rings. At least the inner rings 4a, 8a, the outer rings 4c, 8c, or the rollers 4b, 8b have nitrogen enriched layers for improved durability.

## Description

### [Technical Field]

The present invention relates to engine shafts such as crank shafts; controlling shafts and cam shafts in variable valve-activation systems; balance shafts in balancers; and in particular to assembly-type shafts for automobile engines.

### [Background Art]

In internal combustion engines for example, reciprocating movement of pistons is converted into rotating movement of a crankshaft via conrods.

The crankshaft is classified into one-piece type or assembly type category.

In the one-piece type crankshaft, it is impossible to axially insert crank journal supporting bearings or conrod large ends, and therefore these components must be split type so that they can be assembled to the crankshaft.

It is impossible, either, to axially dispose rolling bearings around crank journals or crank pins, so these rolling bearings also must be split type so that their inner rings and outer rings can be split for installation.

One concern with these split type rolling bearings is durability since their inner rings and outer rings can become out of alignment more easily.

On the contrary, assembly type crankshafts, such as those disclosed in Patent Literature 1 and Patent Literature 2 have their crank webs, crank pins, and crank journals prepared as individual parts. In this case, it is possible to axially insert crank journal supporting bearings and conrod large ends prior to assembling.

It is also possible, when disposing rolling bearings around crank pins and crank journals, to axially insert the rolling bearings around the outer diameter surfaces of the crank pins and crank journals, prior to assembling, so it is possible to use one-piece type rolling bearings in which their inner rings or outer rings are not split.

### [Citation List]

### [Patent Literature]

[Patent Literature 1] JP-A 2003-314529 Gazette
[Patent Literature 2] JP-A 2009-257512 Gazette

### Summary of Invention

### [Technical Problem]

In recent years, driving speed of automobiles is increasing and there is also requirement for improved fuel economy. In order to respond to these, there is increasing requirement that engine shafts such as crankshafts; control shafts and cam shafts in variable valve-activation systems; balance shafts in balancers, should have lower-friction and improved durability.

It is therefore an object of the present invention to provide low-friction, highly durable, assembly type crankshafts and other engine shafts which use one-piece type rolling bearings and therefore are free from concerns on potential alignment problems in inner-rings or outer-rings.

### [Solution to Problem]

In order to achieve the object stated above, the present invention provides an assembly-type engine shaft comprising a non-split type rolling bearing which includes: a non-split type inner ring; a non-split type outer ring; and rollers encased in a retainer and disposed between the inner and the outer rings; wherein the inner ring, the outer ring and rollers are made of steel and at least one of these has a nitrogen enriched layer.
Engine shafts covered by the present invention includes assembly type crankshafts in which crank webs, crank pins and crank journals are prepared as individual parts; control shafts and cam shafts in engine variable valve-activation systems; balance shafts in balancers; etc.

The nitrogen enriched layer is characterized by: that austenitic grain size number is greater than 10; the amount of residual austenite is not smaller than 11 weight percent and not greater than 25 weight percent; nitrogen content is not smaller than 0.1 weight percent and not greater than 0.5 percent; and surface hardness is not lower than HRC 58 (Hv 653).

The rolling bearing used in the crankshaft may have its outer ring directly formed in an inner surface of the conrod large end.

The inner rings of the rolling bearings used for the crankshaft are press-fit around outer diameter surfaces of the crank pins and crank journals, prior to assembling.

The rolling bearings may be provided by needle bearings or cylindrical-roller bearings.

The outer rings of the needle bearings or cylindrical-roller bearings may have a flange.

The rolling bearings may be provided by ball bearings.

The crank pins and the crank journals as parts of the crankshaft may be made of cast iron.

The engine shaft according to the present invention is usable in four-cycle engines which have two or more cylinders.

### Advantageous Effects of Invention

Assembly type engine shafts according to the present invention use one-piece type rolling bearings and therefore free from concerns on potential alignment problems in inner rings or outer rings of the bearings. Further, since at least one of the inner ring, the outer ring and the roller has a nitrogen enriched layer which provides durability, the shafts are low in friction and high in durability.

### [Brief Description of Drawings]

Fig. 1 is a front view which shows a crankshaft in an assembled state, as an embodiment of the assembly type engine shaft according to the present invention.
Fig. 2 is a front view, showing longitudinal sections of some individual parts of the assembly type crankshaft in Fig. 1, before they are assembled.
Fig. 3 is a partially enlarged front view of a crankshaft in an assembled state, as another embodiment of the assembly type engine shaft according to the present invention.
Fig. 4 is a partially enlarged front view of a crankshaft in an assembled state, as still another embodiment of the assembly type engine shaft according to the present invention.
Fig. 5 is a diagram to describe a two-step heat treatment method.
Fig. 6 is a diagram to describe a variation of the two-step heat treatment method.
Fig. 7 is a partially enlarged front view which shows a control shaft in an assembled state, as an embodiment of the assembly type engine shaft according to the present invention.
Fig. 8 is a partially enlarged front view which shows a cam shaft in an assembled state, as an embodiment of the assembly type engine shaft according to the present invention.
Fig. 9 is a partially enlarged front view which shows a balance shaft in an assembled state, as an embodiment of the assembly type engine shaft according to the present invention. Description of Embodiments

Hereinafter, embodiments of the present invention will be described based on the attached drawings.

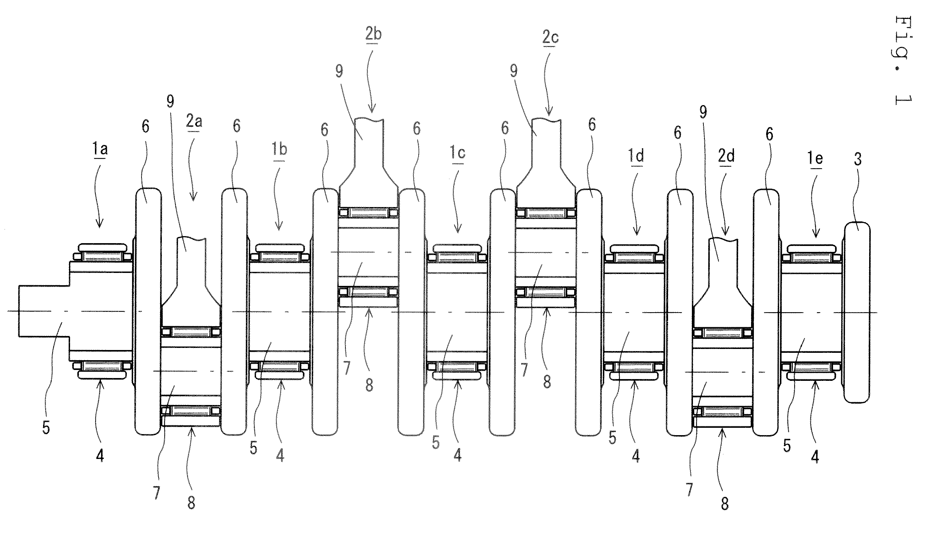

Fig. 1 shows a crankshaft in an assembled state. The shaft is for an in-line four-cylinder engine and represents an embodiment of the assembly type engine shaft according to the present invention.

The crankshaft for an in-line four-cylinder engine includes a first through a fifth crank journal portions 1a, 1b, 1c, 1d, 1e; and four sets of crank portions disposed therebetween as a first through a fourth crank portions 2a, 2b, 2c, 2d. The fifth crank journal portion 1e has an end with a flange 3.

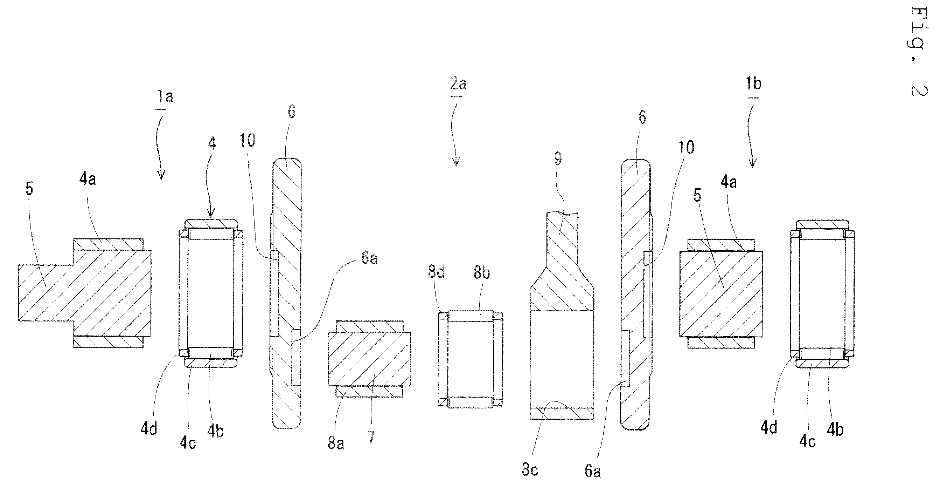

Fig. 2 shows the first and the second crank journal portions 1a, 1b, and the first crank portion 2a placed therebetween. The figure shows a state before they are assembled. The third through the fifth crank journal portions 1c, 1d, 1e are identical with the second crank journal portion 1b whereas the three sets, i.e., the second through the fourth crank portions 2b, 2c, 2d, are identical with the first crank portion 2a, each being an assembly of individual parts.

In the first and the second crank journal portions 1a, 1b, rolling bearings 4 are disposed around outer diameter surfaces of journal shafts 5.

The rolling bearings 4 are provided by needle bearings as shown in Fig. 1 and Fig. 2; however, bearings having a taller section, such as cylindrical-roller bearings and ball bearings, may be used if there is enough space in the engine block.

The rolling bearings 4 in Fig. 1 and Fig. 2 are needle bearings, each including an inner ring 4a, needle rollers 4b encased in a retainer 4d, and an outer ring 4c.

The inner rings 4a are press-fit around outer diameter surfaces of the journal shafts 5 of the crank journal portions 1a, 1b; then the rollers 4b encased in the retainers 4d are axially inserted around inner ring outer surfaces and thereafter, the outer rings 4c are axially inserted, prior to assembling.

Each of the four, i.e., the first through the fourth crank portions 2a, 2b, 2c, 2d is built by connecting a mutually opposed crank webs 6 with a crank pin 7. Pin holes 6a are made at eccentric locations in the mutually opposed surfaces of the crank webs 6, and each end of the crank pin 7 is press-fit into one of the pin holes 6a, to make the assembly.

A large end of conrod 9 is axially inserted around an outer diameter surface of the crank pin 7 via a rolling bearing 8, prior to assembling.

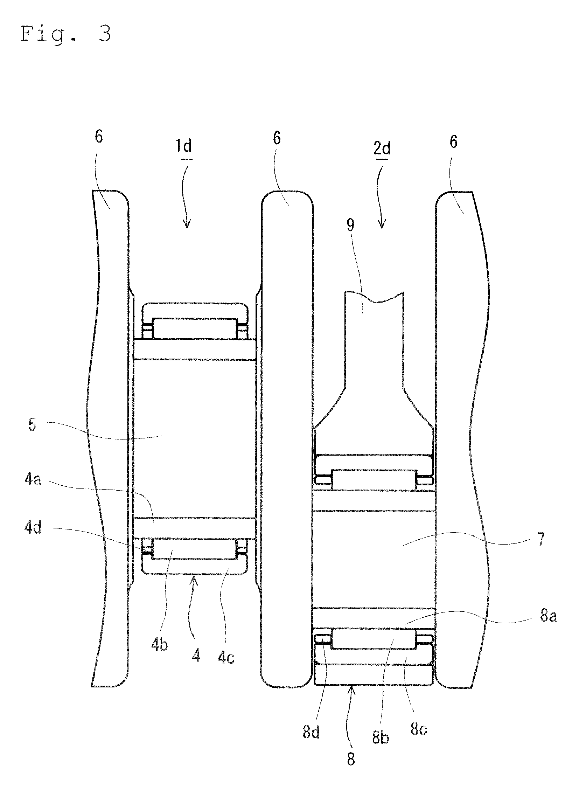

The rolling bearing 8, provided by a needle bearing, includes an inner ring 8a, rollers 8b encased in a retainer 8d, and an outer ring 8c. In the embodiment in Fig. 1 and Fig. 2, an outer ring 8c is integrally formed on an inner diameter surface of the large end of conrod 9; however, the outer ring 8c may be provided by an individual part separate from the large end of the conrod 9 as shown in an embodiment in Fig. 3.

The inner ring 8a of the rolling bearing 8 is press-fit around an outer diameter surface of the crank pin 7, then the rollers 8b encased in the retainer 8d are fitted around the outer surface of the inner ring 8a; and then the large end of the conrod 9, which integrally includes the outer ring 8c in its inner surface, is axially inserted, prior to assembling.

Each of the four sets, i.e., the first through the fourth crank portions 2a, 2b, 2c, 2d, has their crank webs 6, each formed with a shaft hole 10 at a center of its outer surface for press-fitting an end of a corresponding one of the journal shafts 5 of the first through the fifth crank journal portions 1a, 1b, 1c, 1d, 1e.

Fig. 3 shows an embodiment, in which the rolling bearings 4 and the rolling bearings 8 are provided by needle bearings each including a flanged outer ring 8c.

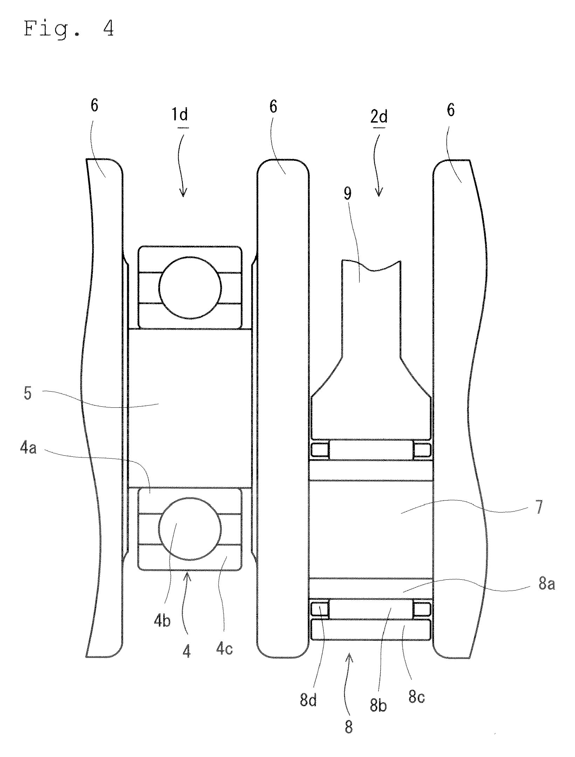

Also, Fig. 4 shows an embodiment, in which each of the first through the fifth crank journal portions 1a, 1b, 1c, 1d, 1e uses a ball bearing as the rolling bearing 4.

The crank webs 6 in each of the four sets, i.e., the first through the fourth crank portions 2a, 2b, 2c, 2d; the flange 3; and the journal shafts in each of the first through the fifth crank journal portions 1a, 1b, 1c, 1d, 1e can be made of cast iron; however, crankshafts made of cast iron cannot have a surface hardness not lower than HRC 58 (Hv 653) which is required for a bearing track surface, even with heat treatment such as induction hardening and austempering.

In the present invention, therefore, rolling fatigue life of the rolling bearings 4 and rolling bearings 8 has been improved by forming a nitrogen enriched layer to be described next, in at least one of the contact surfaces in the inner rings 4a, 8a, the rollers 4b, 8b and the outer rings 4c, 8c which are made of steel such as SUJ 2.

To be effective, the nitrogen enriched layer must satisfy that austenitic grain size number is greater than 10; the amount of residual austenite is not smaller than 11 weight percent and not greater than 25 weight percent; nitrogen content is not smaller than 0.1 weight percent and not greater than 0.5 percent; and surface hardness is not lower than HRC 58 (Hv 653).

Forming such a nitrogen enriched layer as described above enables to improve fatigue life of the contact surfaces in the inner rings 4a, 8a, the rollers 4b, 8b and the outer rings 4c, 8c, thereby improving durability of the bearings and extending life of the crankshaft.

The above-described nitrogen enriched layer can be formed by performing a heat treatment called low-temperature two-step quenching method, to contact surfaces of the inner rings 4a, 8a, the rollers 4b, 8b and the outer rings 4c, 8c. The method will be described below:

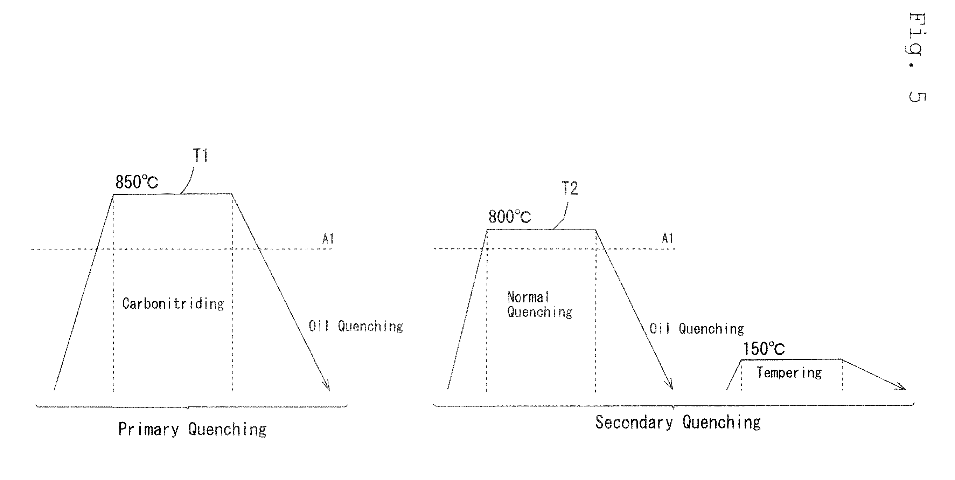

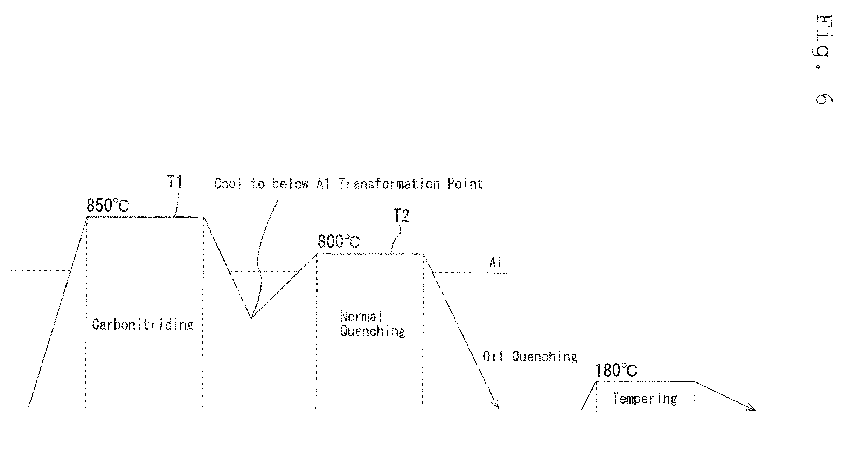

Fig. 5 illustrates an example of the two-step heat treatment method to obtain parts which include nitrogen enriched layers. Also, Fig. 6 is a diagram illustrating a variation of the two-step heat treatment method shown in Fig. 5. Fig. 5 shows a heat treatment pattern in which primary quenching and secondary quenching are performed whereas Fig. 6 shows a heat treatment pattern in which cooling to temperatures not higher than A1 transformation point in the quenching process is followed by re-heating and final quenching. Whichever method produces the nitrogen enriched layer described above, in the work piece. In these figures, Treatment T1 is a process in which carbon and nitrogen are diffused in the base steel with sufficient level of carbon absorption, and then cooling is performed to temperatures not higher than A1 transformation point. Then, Treatment T2 in the drawing is performed in which re-heating to temperatures not higher than in Treatment T1 is followed by oil quenching. It should be noted here that the term two-step heat treatment covers both of the methods illustrated in Fig. 5 and Fig. 6.

The heat treatment described above is capable of producing better carbonitriding in surface layers, improved crack strength and reduced dimensional change over time than a simple combination of carbonitriding and single-step quenching that follows. According to the heat treatment method described above, it is possible to obtain micro structures in which austenitic grain size is smaller than a half of conventional sizes. Parts processed in the above-described heat treatment exhibit extended rolling fatigue characteristics, improved cracking strength, and reduced dimensional change over time. It should be noted here that there is no change in the austenitic grains between in the surface layers where the nitrogen enriched layer exists and in deeper layers. Therefore, a region where the above-mentioned crystal grain size number should be found in a range covering the surface and deeper layers.

The austenitic grain size described above may be obtained by means of normal procedures listed in JIS (Japanese Industrial Standards), or by first employing a section method to obtain an average grain size which corresponds to the crystal grain size number described above, and then converting the obtained number. The term austenitic grains mean crystal grains of austenite which occurred during phase transformation at the time of heating in the quenching process and are residual as hysteresis even after transformation into martensite caused by cooling.

The amount of residual austenite is a value found in a top 50 µm layer of the track surface after grinding, and can be measured, for example, by X ray diffractometry through comparison of diffraction intensities between martensite α (211) and residual austenite γ (220). Another usable method is to use a magnetic balance for example, to determine magnetizing force. This is a method based on the fact that austenite phase is non-magnetic while ferrite phase has a strong magnetizing force. Various other measuring instruments are also available, so it is easy to obtain the values.

The nitrogen enriched layer is a layer which is formed as a surface layer containing an increased amount of nitrogen. The layer can be formed by carbonitriding, or other various types of treatment capable of causing nitridation. The nitrogen content in the nitrogen enriched layer is a value found in the top 50 µm layer of the tracking surface after grinding, and can be measured by means of EPMA (Electron Probe Micro-Analysis; wavelength-dispersive X-ray analyzer) for example.

Thus far, description has covered assembly type crankshafts as embodiments. However, the present invention is also applicable to control shafts and cam shafts for variable valve-activation systems, and balance shafts for balancers.

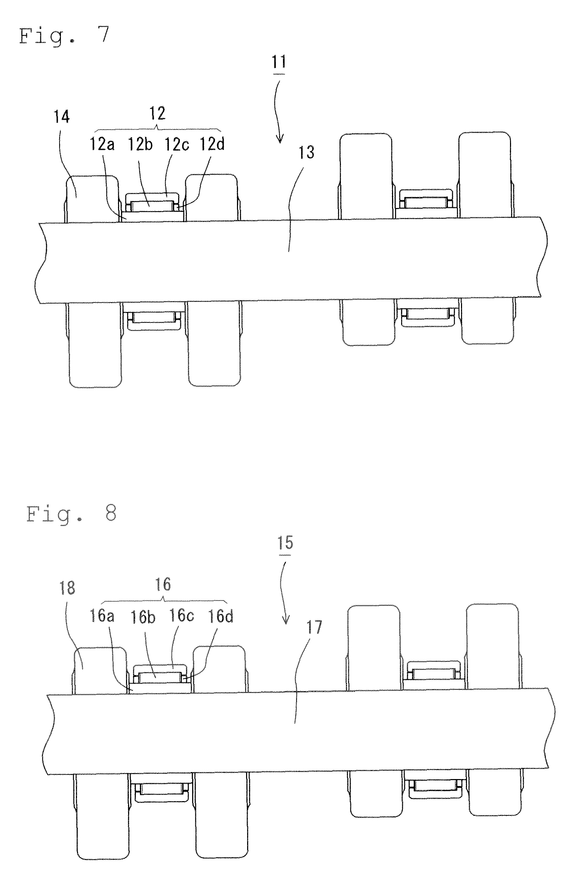

Fig. 7 is an embodiment as a control shaft 11 for a variable valve-activation system.
The control shaft 11 includes a journal portion 13 supported by needle bearings 12; and control cams 14.
The needle bearings 12 each include an inner ring 12a, rollers 12b encased in a retainer 12d, and a flanged outer ring 12c.

Fig. 8 is an embodiment as a com shaft 15 for a variable valve-activation system.
The cam shaft 15 includes a journal portion 17 supported by needle bearings 16; and valve actuating cams 18.
The needle bearings 16 each include an inner ring 16a, rollers 16b encased in a retainer 16d, and a flanged outer ring 16c.

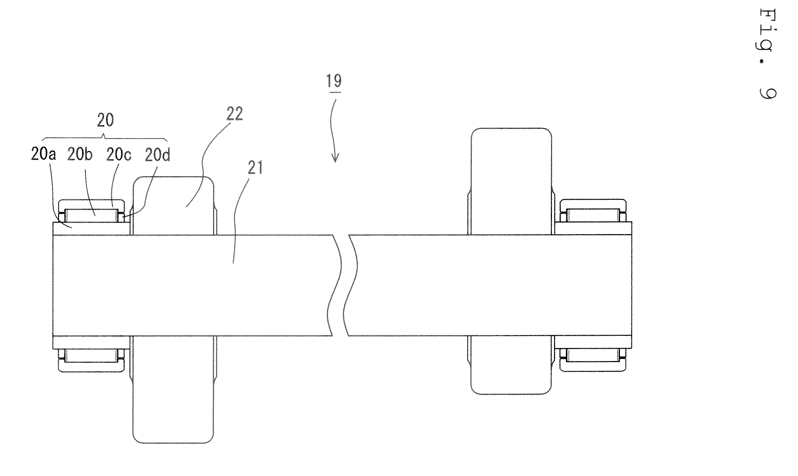

Figure 9 shows a balance shaft 19 for a balancer. The shaft includes a journal portion 21 supported by needle bearings 20; and counter weights 22.
The needle bearings 20 each include an inner ring 20a, rollers 20b encased in a retainer 20d, and a flanged outer ring 20c.

Thus far, embodiments of the present invention have been described with reference to the drawings. However, the present invention is not limited to these illustrated embodiments. Any of these embodiments illustrated thus far may be modified or changed in many ways within the scope or within the equivalence of the present invention.

### [Reference Sign List]

- 1a, 1b, 1c, 1d, 1e: crank journal portion
- 2a, 2b, 2c, 2d: the crank portion
- 3: flange
- 4: rolling bearing
- 4a: inner ring
- 4b: roller
- 4c: outer ring
- 4d: retainer
- 5: journal shaft
- 6: crank web
- 6a: pin hole
- 7: crank pin
- 8: rolling bearing
- 8a: inner ring
- 8b: roller
- 8c: outer ring
- 8d: retainer
- 9: conrod
- 10: shaft hole
- 11: control shaft
- 12: needle bearing
- 12a: inner ring
- 12b: roller
- 12c: outer ring
- 12d: retainer
- 13: journal portion
- 14: control cam
- 15: cam shaft
- 16: needle bearing
- 16a: inner ring
- 16b: roller
- 16c: outer ring
- 16d: retainer
- 17: journal portion
- 18: valve actuation cam
- 19: balance shaft
- 20: needle bearing
- 20a: inner ring
- 20b: roller
- 20c: outer ring
- 20d: retainer
- 21: journal portion
- 22: counter weight portion

## Claims

1. An assembly-type engine shaft comprising a non-split type rolling bearing which includes: a non-split type inner ring; a non-split type outer ring; and rollers encased in a retainer and disposed between the inner and the outer rings; wherein the inner ring, the outer ring and rollers are made of steel and at least one of these has a nitrogen enriched layer.

2. The assembly type engine shaft according to Claim 1, serving as an assembly type crankshaft, wherein crank webs, a crank pin and crank journals are prepared as individual parts.

3. The assembly type engine shaft according to Claim 1, serving as a control shaft in a variable valve-activation system of an engine.

4. The assembly type engine shaft according to Claim 1, serving as a cam shaft in a variable valve-activation system of an engine.

5. The assembly type engine shaft according to Claim 1, serving as a balance shaft in a balancer of an engine.

6. The assembly type engine shaft according to one of Claims 1 through 5, wherein the nitrogen enriched layer satisfies that austenitic grain size number is greater than 10; contains an amount of residual austenite at a level not smaller than 11 weight percent and not greater than 25 weight percent; contains an amount of nitrogen at a level not smaller than 0.1 weight percent and not greater than 0.5 percent; and has a surface hardness not lower than HRC 58 (Hv 653).

7. The assembly type engine shaft according to Claim 2, wherein the outer ring of the rolling bearing is directly formed in an inner diameter surface of a conrod large end.

8. The assembly type engine shaft according to Claim 2, wherein the rolling bearings have their inner rings press-fit around an outer surface of a crank pin and around an outer surface of a crank journal respectively.

9. The assembly type engine shaft according to Claim 8, wherein the crank pin and the crank journal around which the inner rings of the rolling bearings are press-fit are made of cast iron.

10. The assembly type engine shaft according to one of Claims 1 through 9, for use in a four-cycle engine having two or greater number of cylinders.

11. The assembly type engine shaft according to one of Claims 1 through 10, wherein the rolling bearings are provided by needle bearings or cylindrical-roller bearings.

12. The assembly type engine shaft according to one of Claims 1 through 10, wherein the needle bearings or the cylindrical-roller bearings have flanged outer rings.

13. The assembly type engine shaft according to one of Claim 1 through 10, wherein the rolling bearing is provided by a ball bearing.

14. A method of manufacture of an assembly-type engine shaft comprising a non-split type rolling bearing which includes: a non-split type inner ring; a non-split type outer ring; and rollers encased in a retainer and disposed between the inner and the outer rings; the inner ring, the outer ring and rollers being made of steel and at least one of these having a nitrogen enriched layer; wherein the nitrogen enriched layer is formed by a two-step heat treatment process comprising: a treatment T1 of cooling a steel work piece to temperatures not higher than A1 transformation point, after diffusing carbon and nitrogen in the base steel with sufficient level of carbon absorption; and a treatment T2 of re-heating the steel work piece to temperatures lower than the temperatures achieved in the treatment T1 and then performing oil quenching.
